# EUROPEAN PATENT APPLICATION

(11) **EP 3 543 877 A1**
(43) Date of publication of application: **25.09.2019**
(21) Application number: 17801322.3
(22) Date of filing: 31.03.2017
(51) Int. Cl.: G06F 17/30

(54) **METHOD AND DEVICE FOR PROCESSING ACCUMULATIVE RETRIEVAL, TERMINAL AND STORAGE MEDIUM**

(30) Priority: 15.11.2016 CN 201611005227
(71) Applicant: Ping An Technology (Shenzhen) Co., Ltd., Shenzhen, Guangdong 518000 (CN)
(72) Inventor: LEI, Xing, Shenzhen Guangdong 518000 (CN); XIAO, Quanhai, Shenzhen Guangdong 518000 (CN)
(74) Representative: Penza, Giancarlo
(86) International application number: PCT/CN2017/079015
(87) International publication number: WO 2018/090535

(57) **Abstract**

The present disclosure provides an accumulated retrieval processing method. The method includes steps as follows: obtaining a retrieval instruction, the retrieval instruction comprising a retrieval keyword; performing retrieving according to the retrieval instruction, and displaying a corresponding retrieval result, the retrieval result including retrieval data matching with the retrieval keyword; obtaining a selected instruction for the retrieval data; adding the retrieval data selected according to the selected instruction to a preset selected display area, the preset selected display area is configured to independently display the selected retrieval data. According to the aforementioned method, the display area is used to independently display the selected retrieval data. Therefore the retrieval data selected by multiple retrieval can be displayed in the display area, thereby facilitating to summarize and process the retrieval data of the multiple retrieval. In addition, an accumulated retrieval processing device, a terminal, and a non-transitory computer-readable medium are provided.

## Description

### CROSS-REFERENCE TO RELATED APPLICATION

This application claims priority to Chinese Patent Application No. 2016110052270, entitled "ACCUMULATED RETRIEVAL PROCESSING METHOD AND DEVICE" filed November 15, 2016, the contents of which is expressly incorporated by reference herein in its entirety.

### FIELD OF THE INVENTION

The present disclosure relates to a field of information processing technology, and more particularly relates to an accumulated retrieval processing method, a device, a terminal, and a storage medium.

### BACKGROUND OF THE INVENTION

Information retrieval is often required in daily life and work. For example, book retrieval, thesis retrieval, insurance policy retrieval are often required. The conventional information retrieval is directed to retrieval keyword input by users to display the corresponding retrieval results, so as to being consulted and screened for the users. However, the conventional retrieval method cannot easily achieve summarizing and processing the data of multiple retrieval.

### SUMMARY OF THE INVENTION

According to various embodiments of the present disclosure, an accumulated retrieval processing method, a device, a server, and a storage medium are provided.

An accumulated retrieval processing method includes:
obtaining a retrieval instruction, the retrieval instruction including a retrieval keyword;
performing retrieving according to the retrieval instruction, and displaying a corresponding retrieval result, the retrieval result including retrieval data matching with the retrieval keyword;
obtaining a selected instruction for the retrieval data; and
adding the retrieval data selected according to the selected instruction to a preset selected display area, the preset selected display area is used to independently display the selected retrieval data.

An accumulated retrieval processing device includes:
a retrieval instruction obtaining module used to obtain a retrieval instruction, the retrieval instruction including a retrieval keyword;
a retrieving module used to perform retrieving according to the retrieval instruction and display a corresponding retrieval result, the retrieval result including retrieval data matching with the retrieval keyword;
a selecting module used to obtain a selected instruction for the retrieval data; and
an accumulated displaying module used to add the selected retrieval data to a preset selected display area, the preset selected display area is used to independently display the selected retrieval data.

A terminal includes a processor, and a memory storing computer executable instructions, which, when executed by the processor cause the processor to perform steps including:
obtaining a retrieval instruction, the retrieval instruction including a retrieval keyword;
performing retrieving according to the retrieval instruction, and displaying a corresponding retrieval result, the retrieval result including retrieval data matching with the retrieval keyword;
obtaining a selected instruction for the retrieval data; and
adding the retrieval data selected according to the selected instruction to a preset selected display area, the preset selected display area is used to independently display the selected retrieval data.

At least one nonvolatile computer readable storage medium storing computer executable instructions, which, when executed by at least one processor cause the at least one processor to perform steps including:
obtaining a retrieval instruction, the retrieval instruction including a retrieval keyword;
performing retrieving according to the retrieval instruction, and displaying a corresponding retrieval result, the retrieval result including retrieval data matching with the retrieval keyword;
obtaining a selected instruction for the retrieval data; and
adding the retrieval data selected according to the selected instruction to a preset selected display area, the preset selected display area is used to independently display the selected retrieval data.

The details of one or more embodiments of the present disclosure will be presented with reference to the following drawings and description. Other characteristic, purposes and advantages of the present disclosure will be more apparent from the specification, drawing and claims.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a schematic diagram of an implementation environment of an accumulated retrieval processing method according to an embodiment.
FIG. 2 is a block diagram of a terminal according to an embodiment;
FIG. 3 is a flowchart of an accumulated retrieval processing method according to an embodiment;
FIG. 4 is a schematic diagram illustrating an accumulated retrieval according to an embodiment;
FIG. 5 is a flowchart of an accumulated retrieval processing method according to another embodiment;
FIG. 6 is a schematic diagram of a preset selected display area according to an embodiment;
FIG. 7 is a block diagram of a device of processing an accumulated retrieval according to an embodiment;
FIG. 8 is a block diagram of a device of processing an accumulated retrieval according to another embodiment; and
FIG. 9 is a block diagram of a device of processing an accumulated retrieval according to a yet another embodiment.

### DETAILED DESCRIPTION OF THE EMBODIMENTS

The present disclosure will be described in details with reference to the accompanying drawings and embodiments such that the purpose, technical solution and advantages of the present disclosure will be more apparent. The various embodiments of the invention may, however, be embodied in many different forms and should not be construed as limited to the embodiments set forth herein. Rather, these embodiments are provided so that the present disclosure will be thorough and complete, and will fully convey the scope of the present disclosure to those skilled in the art.

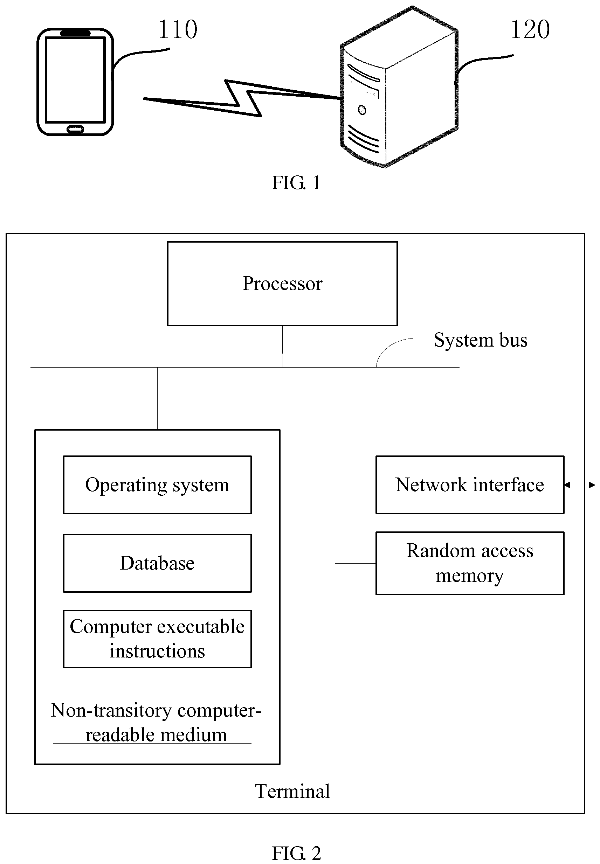

FIG. 1 is a schematic diagram of an implementation environment of an accumulated retrieval processing method according to an embodiment. Referring to FIG. 1, a terminal 110 communicates with a server 120 through a network to obtain corresponding retrieval data from the server. Specifically, the terminal 110 can obtain a retrieval instruction, which includes a retrieval keyword. The terminal 110 performs the retrieval according to the retrieval instruction, and displays a corresponding retrieval result. The retrieval result includes retrieval data matching with the retrieval keyword. The terminal 110 obtains a selected instruction for the retrieval data. The selected retrieval data is added to a preset selected display area, which is used to independently display the selected retrieval data.

It should be understood that the terminal 110 includes, but not limited to, a personal computer, a smart phone, a tablet computer, a laptop computer, and a portable wearable device.

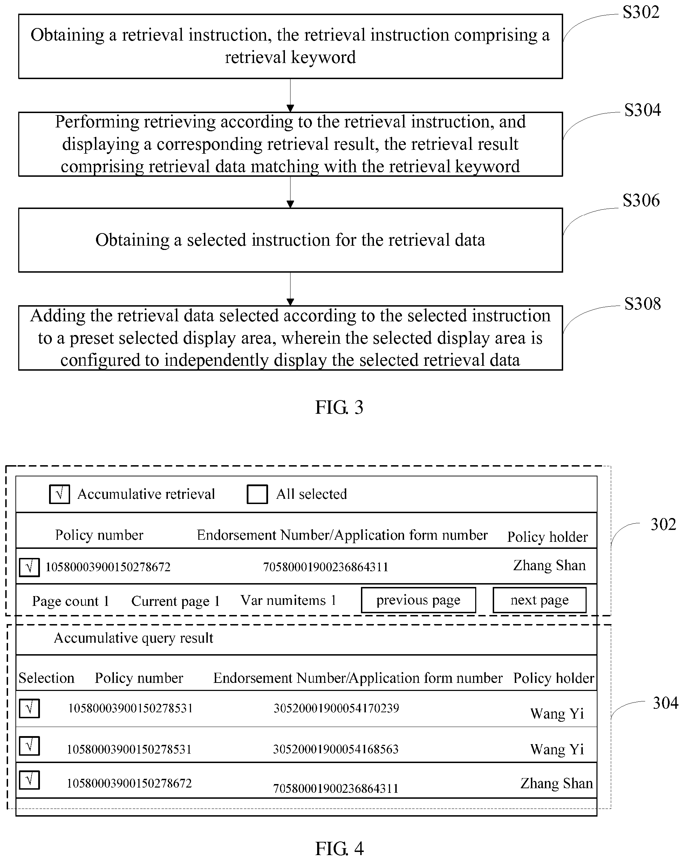

Referring to FIG. 2, FIG. 2 is a block diagram of a terminal according to an embodiment. The terminal includes a processor, a non-transitory storage medium, a Read-Only Memory (ROM), and a network interface, which are coupled via a system bus. The processor is used to provide computation and control capabilities to support the entire operation of the terminal. The non-transitory storage medium of the terminal stores an operating system, a database, and computer-readable instructions. The database stores data which can be performed a data retrieval. The computer executable instructions can be executed by the processor for implementing an accumulated retrieval processing method of embodiments shown in FIGS. 3 to 5, and the method is applied to the terminal. The RAM in the terminal provides an operation environment with a high speed cache for the operating system, the database, and the computer-readable instructions in the non-transitory storage medium. The network interface is used to communicate with an external terminal or server.

Persons skilled in the art can understand that, the structure shown in FIG 2 is only a part of the structure of the solution of the present disclosure, which does not impose limitation to the terminal which applies to the solution of the present disclosure. Specifically, the terminal can include components more or less than those shown in the drawing, or can combine some components, or can have different component deployment.

According to an embodiment, referring to FIG. 3, an accumulated retrieval processing method is provided, which can be executed on a terminal as shown in FIGS. 1 and 2. The method specifically includes the steps as follows:

In step S302, a retrieval instruction is obtained, which includes a retrieval keyword.

In the illustrated embodiment, the terminal can provide a corresponding retrieval interface including a retrieval box and a retrieval button, which are related to the data retrieval. The terminal can receive the retrieval keyword input by a user through the input device and generate the corresponding retrieval instruction. The retrieval instruction includes the retrieval keyword input by the user according to a detected click operation corresponding to the retrieval button. The retrieval keyword can be a retrieval keyword of insurance category, such as an insurance policy number, an insurance user name, or a telephone number.

In step S304, retrieval is performed according to the retrieval instruction, and a corresponding retrieval result is displayed. The retrieval result includes retrieval data matching with the retrieval keyword.

In the illustrated embodiment, the terminal can perform retrieval from a corresponding database according to the retrieval instruction, so as to find the retrieval data matching with the retrieval keyword, thereby generating the corresponding retrieval result corresponding to the inquired retrieval data and displaying it on a retrieval interface. The database can be at a local terminal or can also be on a remote server. When it is at the local, the corresponding data is searched from a local database, directly, and the searched data matching with the keyword is displayed on a display screen of the terminal. When it is on the remote server, a preset interface is directly called to establish a connection with the server. The matched retrieval data is inquired and obtained from a database on the server, and is displayed in the retrieval interface.

According to an embodiment, the inquired and matched retrieval data can be displayed one by one. A corresponding selection box or selection button can be provided for each retrieval data, therefore the user can perform a selected operation to the retrieval data by the input device. When the number of inquired retrieval data exceeds a preset number, it can be displayed in multiple pages. Retrieval data on the specific page can be displayed according to the user's operation.

In step S306, a selected instruction for the retrieval data is obtained.

In the illustrated embodiment, the user can perform a selected operation to each displayed retrieval data in the displayed retrieval result through the input device, and multiple displayed retrieval data can be selected one by one or in batch. For example, a click can be performed to the corresponding selection box or selection button through a mouse. The terminal can detect and recognize the operation of the user in real time, and the corresponding selected instruction is generated when a selected operation to the retrieval data is detected.

The selected retrieval data is added to a preset selected display area, the preset selected display area is used to independently display the selected retrieval data.

In the illustrated embodiment, the terminal also sets the display area in the retrieval interface to independently display the selected retrieval data,. The displayed retrieval data will not disappear along with re-retrieval, so that the data selected by multiple retrieval can be copied to the display area for summary display. The user can summarize and print the retrieval data selected in the history in the display area.

According to an embodiment, a corresponding cache area is also preset in the terminal to store the selected retrieved data. When detecting that the corresponding retrieval data is selected, the corresponding retrieval data can be copied to the cache area according to the selected instruction. And then the data in the cache area is displayed in the configured display area.

According to an embodiment, before step S308, the method further includes: whether the current retrieval operation is in an accumulated retrieval state is detected, and if the current retrieval operation is in the accumulated retrieval state, step S308 is performed, or else step S308 is not executed.

According to an embodiment, a selection box can be set in the retrieval interface to select whether it is the accumulated retrieval. The user can select or uncheck the selection box. The terminal determines whether the current retrieval is in the accumulated retrieval state by detecting an operation performed to the selection box by the user. If the current retrieval is in the accumulated retrieval state, the step S308 is executed, or else a normal retrieval is determined, and the step S308 is not executed.

For example, FIG. 4 is a schematic diagram illustrating an accumulated retrieval according to an embodiment. A portion 402 in FIG. 4 is a partial schematic diagram of the retrieval interface. A portion 404 in FIG. 4 is the display area of the accumulated retrieval. The retrieval interface 402 can display corresponding retrieval data and acquire the selected instruction generated by the selected operation performed to the retrieval data by the user. When the current retrieval operation is in the accumulated retrieval state (i.e., the "accumulated query" in the drawing is checked), and the selected retrieval data is added to the display area 404. The display area 404 displays the retrieval data selected by the retrieval operation and the previous retrieval operation.

In the illustrated embodiment, the display area is used to independently display the selected retrieval data. Therefore the retrieval data selected by multiple retrieval can be displayed in the display area, thereby facilitating to summarize and process the retrieval data of the multiple retrieval.

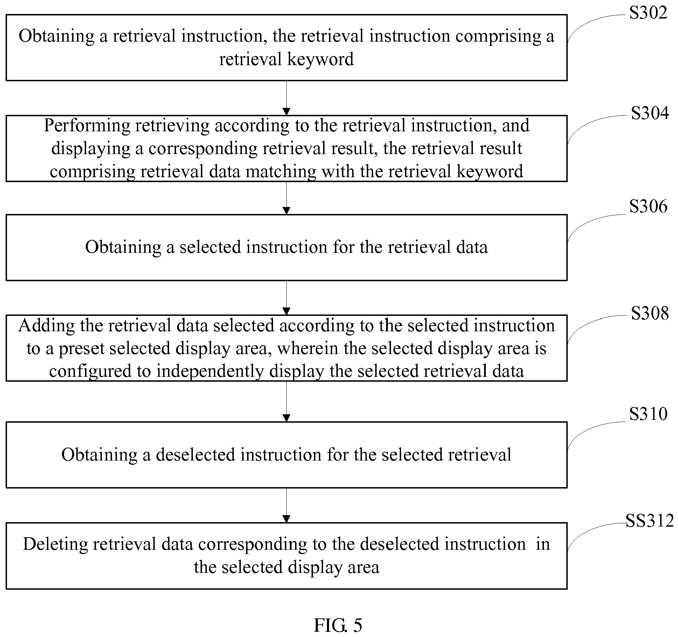

According to an embodiment, referring to FIG. 5, another accumulated retrieval processing method is provided. The method further includes steps as follows:

In step S310, a deselected instruction for the selected retrieval data is obtained.

In the illustrated embodiment, the user can deselect the previously selected retrieval data on the retrieval interface. For example, the click can be performed again to the selection box or the selection button which are already in a selected state. When the terminal detects the user's click operation again, the corresponding deselected instruction is generated.

In step S312, retrieval data corresponding to the deselected instruction is deleted in the preset selected display area.

In the illustrated embodiment, the retrieval data displayed in the display area has an association relation with the data retrieved and selected according to the retrieval instruction. When the deselected instruction is obtained, the corresponding retrieval data can be determined according to the association relation, then the retrieved data copied to the cache area is deleted, so that the display of the retrieval data is also canceled in the display area.

In the illustrated embodiment, the deselected instruction for the retrieval data is obtained, and the corresponding retrieval data in the display area is also deleted, so as to cancel the display, which facilitates the user to alter the selected retrieval data, thereby improving the convenience of summarizing the retrieval data.

According to an embodiment, the display area is a separate display window. The display area is configured as the separate display window, which eliminates the occupation to the retrieval interface and facilitates the operation of the user. When it is necessary to view the accumulated retrieval data, the separate display window can be opened, directly.

The aforementioned accumulated retrieval processing method further includes: a prompt icon is displayed when a content of the display window is not empty, and the prompt icon is used to prompt that there is the retrieval data in the display window. The display window is displayed when a click instruction for the prompt icon is obtained.

In the illustrated embodiment, the terminal is further provided with a prompt icon which is used to prompt that there is the retrieval data in the display window. When the content in the display window is not empty, i.e., when detecting that the relevant retrieval data is selected by the user, the prompt icon will be displayed at a preset position of the retrieval interface. The preset position can be any position, such as the preset position can default to the lower right corner. The preset position can receive a mobile operation of the user, and the position of the prompt icon can be changed and moved according to the mobile operation.

When the terminal detects the user's click operation to the prompt icon, a corresponding click instruction is generated, and the display window is displayed according to the click instruction. The displayed display window includes the retrieved data selected by the user in the process of performing the retrieval operation.

Furthermore, when the content of the display window is empty, the prompt icon is hidden. If the content of the display window is empty, i.e., the user has not yet selected the retrieval data, thus it is not necessary to display the prompt icon.

In the illustrated embodiment, when an instruction of clicking the prompt icon is obtained, and then the display window is displayed. When only the prompt icon is displayed, it is not necessary to occupy much more areas of the interface, which improves the convenience of performing the data retrieval for the user.

According to an embodiment, the display window can be hidden if the instruction of clicking the prompt icon is obtained again after the display window has been displayed.

According to an embodiment, when the data retrieval can be performed in a browser, the prompt icon and the display window are global objects across webpages. All pages opened by the browser share the prompt icon and the display window.

According to an embodiment, the aforementioned accumulated retrieval processing method further includes: generating a corresponding father node according to the retrieval instruction, when the retrieval data corresponding to different retrieval instructions is included in the preset selected display area. The selected retrieval data is used as a child node of the father node, and the retrieval data is displayed in the preset selected display area in the a form of a loading tree.

In the illustrated embodiment, the corresponding retrieval keyword can be displayed on the father node. When the selected instruction for the retrieval data is obtained, the selected retrieval data can be used as a lower level node data of the father node, i.e., the child node. The father nodes generated according to the retrieval instructions corresponding to different retrieval keywords are different. Whether the same father node has been generated according to the retrieval instruction can be detected before generating the father node. If the same father node has been generated, it is not necessary to generate the same father node again. The retrieval data selected by the retrieval instruction is added to the father node as it's corresponding lower level node data.

In the display area, the retrieval data selected by multiple retrieval can be displayed in the form of a tree. A corresponding display/shrink button can be provided for each father node, and the child node data within the father node can be displayed or shrunk by obtaining a click operation to the display/shrink button, thereby further improving the convenience of inquiring and further processing the data of the accumulated retrieval.

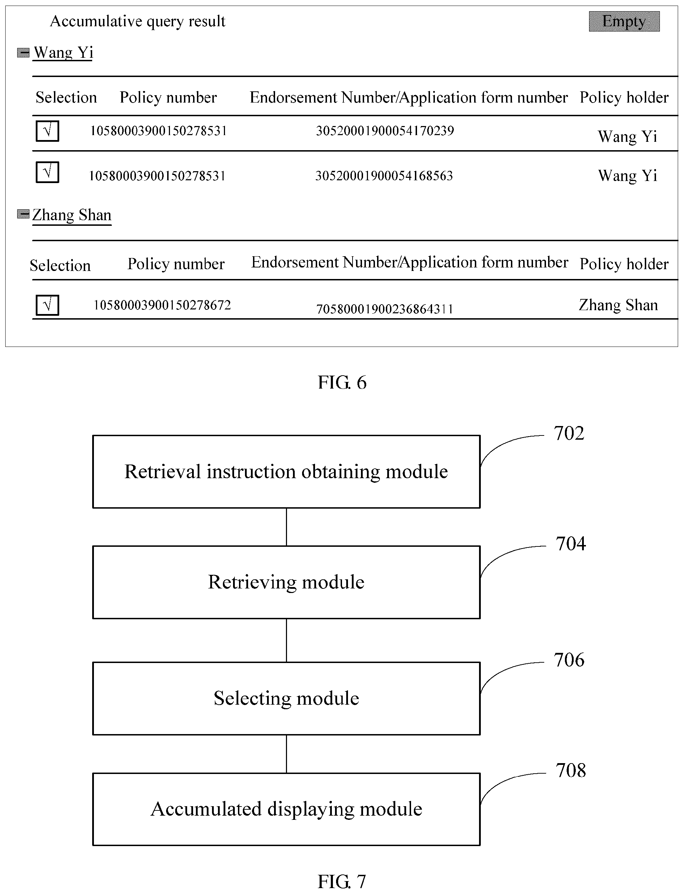

For example, when a first retrieval instruction contains the keywords including "Wang Yi", a second retrieval instruction contains the keywords including "Zhang San", and the display interface of the preset selected display area as shown in FIG. 6 can be generated, and FIG. 6 is a schematic diagram of the preset selected display area according to an embodiment. The preset selected display area shows the first father node generated as "Wang Yi", which includes two child nodes data below. The second father node is "Zhang San", which includes one child node data.

According to an embodiment, the terminal can generate one father node according to one or more retrieval instructions which are determined to belong to the same time range, and the selected retrieved data corresponding to the one or more retrieval instructions is used as the child node of the father node.

According to an embodiment, a time interval threshold between adjacent retrieval instructions is preset in the terminal, and the time interval threshold can be any value, such as 5 minutes. The terminal obtains generation time of each retrieval instruction and calculates time interval between the adjacent generation time, and compares the value size between each time interval and the time interval threshold. When the time interval is less than the time interval threshold, the corresponding two retrieval instructions can be summarized as the one father node.

For example, referring to Table 1 below, which is a generation time schedule of each retrieval instruction. When the time interval threshold is 5 minutes, a first father node can be generated according to the retrieval instructions 1 to 3, a second father node can be generated according to the retrieval instructions 4 to 6, and a third father node can be generated according to the retrieval instructions 7 to 8.

**TABLE 1**

| Retrieval instruction | generated time |
|---|---|
| retrieval instruction 1 | 10:25:36 |
| retrieval instruction 2 | 10:26:36 |
| retrieval instruction 3 | 10:29:36 |
| retrieval instruction 4 | 10:35:36 |
| retrieval instruction 5 | 10:37:36 |
| retrieval instruction 6 | 10:40:36 |
| retrieval instruction 7 | 10:48:36 |
| retrieval instruction 8 | 10:52:36 |

According to an embodiment, step of generating a corresponding father node according to the retrieval instruction includes: a similarity degree between each retrieval instruction is detected and the corresponding father node is generated according to multiple retrieval instructions whose similarity degree is greater than a preset similarity degree threshold.

In the illustrated embodiment, the terminal may further retrieve the similarity degree between each retrieval instruction. The greater the similarity degree, the greater the identity of the target to be retrieved by the user, thus retrieval instructions whose similarity degree is greater than the preset similarity degree threshold can be concluded into the same father node. And the similarity degree threshold between the retrieval instructions can be calculated by a similarity degree between each keyword.

According to an embodiment, a semantic database of words and sentences is pre-established on the terminal or the remote server, which contains a large number of the words and the sentences. In the semantic database, a real number eigenvector of each word and sentence is further configured, and a dimension of the eigenvector of each word and sentence is the same (setting as a dimension vector). Parameters of each dimension represent the semantics corresponding to one aspect of the word. The larger the dimension is, the more abundant of the semantics of the word can be expressed by the eigenvector. For example, a first dimension of the eigenvector represents a probability that the word belongs to a noun. According to an embodiment, the eigenvector of each word and sentence is a 150-dimensional real number vector.

The terminal can obtain the eigenvector corresponding to the keyword in each instruction from the semantic database, and calculate a difference between each eigenvector. The smaller the difference, the greater the similarity degree of the semantic. When the calculated similarity degree is greater than the preset similarity degree threshold, the two or more retrieval instructions are concluded into one father node. At the same time, the selected retrieval data corresponding to the two or more retrieval instructions is used as the child node data of the father node.

In the illustrated embodiment, the convenience of the management of the retrieval data can be further improved by using the multiple retrieval instructions whose similarity degree is greater than the similarity degree threshold as the same father node according to the similarity degree between the retrieval instructions.

In the illustrated embodiment, the step of adding the retrieval data selected according to the selected instruction to the preset selected display area includes: the retrieval data ▲ 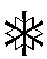 ● 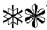 ▼ 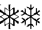 within a preset time range is added to the preset selected display area.

In the illustrated embodiment, the terminal can also configure a corresponding length of retrieval time in advance. The selected instruction generated within a range length of time, for example, one hour or two hours. The selected retrieval instructions generated within a range of length of retrieval time are recorded, and the retrieval data respectively selected by all the retrieval instructions is recorded. The retrieval data is added to the preset selected display area.

According to an embodiment, when the user performs the retrieval using a browser or a related retrieval application software, the terminal can record time of closing a data retrieval main page on the browser or exiting the retrieval application software at the last time. When the user opens the data retrieval main page of the browser or the related retrieval application software again, the current opening time is obtained. Time interval between the opening time and the closing time at the last time is calculated, whether the time interval is less than the preset length of the retrieval time is compared. If the time interval is less than the preset length of the retrieval time, the retrieval data displayed in the display area at the last time is obtained, which is displayed again, thereby realizing that the selected retrieval data in the preset time range is added to the preset selected display area. The convenience of summarizing the retrieval data is further improved.

According to an embodiment, the terminal may record the retrieved data selected in a period during which the user opens and closes the data retrieval main page or retrieval application software. And a corresponding retrieval link and description information including a corresponding retrieval time are generated.

The terminal may display a corresponding retrieval link interface according to the user's operation. The retrieval link interface includes a retrieval link corresponding to each period. For example, a button for displaying the corresponding retrieval link interface, such as "retrieval history", can be provided on the retrieval main page, and the retrieval link interface can be displayed when a click operation performed to the "retrieval history" button by the user is obtained.

When a click operation performed to the retrieval link by the user is obtained, a corresponding selected display area is displayed according to the click operation. The display area contains all the retrieval data selected by the user during the period, which facilitates the user to inquire historical retrieval data.

According to an embodiment, prior to adding the retrieval data selected according to the selected instruction to the preset selected display area, the method further includes: an adding instruction for the retrieval data is obtained.

In the illustrated embodiment, the terminal may further configure an adding button in the retrieval interface, and the corresponding adding instruction can be generated when the click performed to the adding button is detected. The adding instruction is used to add the retrieval data which is already in the selected state in the current retrieval interface to the display area.

In the illustrated embodiment, the step of adding the retrieval data selected according to the selected instruction to the preset selected display area includes: the 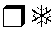 ▼ 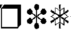 ❖ 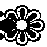 ● data is added to the preset selected display area according to the adding instruction.

In the illustrated embodiment, when the adding instruction is obtained, the retrieval data which is already in the selected state in the current retrieval interface is obtained according to the adding instruction. And the retrieval data is copied to the preset cache area, and then the copied retrieval data is added to the display area to display. Thus, multiple retrieval data which is already in the selected state can be added to the display area at once according to the adding instruction. Therefore, it is not necessary to detect the user's selected operation in real time, and then displaying according to the selected instruction generated from the selected operation, thereby reducing the resource consumption.

In the illustrated embodiment, the aforementioned accumulated retrieval processing method further includes: a corresponding 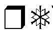 ▼ 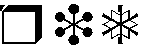 ❖ 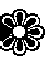 ● link is generated in the display area according to the retrieval instruction, thereby re-displaying the retrieval result in a retrieval interface, when a click instruction for the retrieval link is obtained.

According to an embodiment, referring to FIG. 7, an accumulated retrieval processing device is provided, which includes:

A retrieval instruction obtaining module 702 used to obtain a retrieval instruction, and the retrieval instruction includes a retrieval keyword.

A retrieving module 704 used to perform retrieving according to the retrieval instruction and display a corresponding retrieval result, and the retrieval result includes retrieval data matching with the retrieval keyword.

A selecting module 706 used to obtain a selected instruction for the retrieval data.

An accumulated displaying module 708 used to add the selected retrieval data to a preset selected display area, and the preset selected display area is used to independently display the selected retrieval data.

According to an embodiment, the display area is a separate display window. The accumulated display module 708 is further used to display a prompt icon which is used to prompt that there is the retrieval data in the display window, when a content of the display window is not empty. The accumulated display module 708 is further used to display the display window when a click instruction for the prompt icon is obtained. The prompt icon is hidden, when the content of the display window is empty.

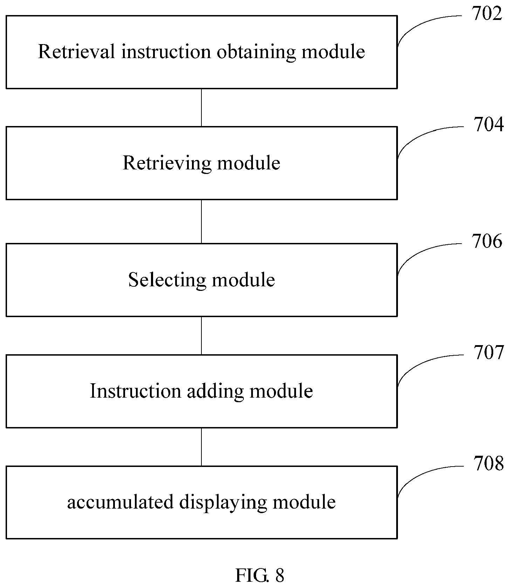

According to an embodiment, referring to FIG. 8, another accumulated retrieval processing device is provided, which includes:

An instruction adding module 707 used to obtain an adding instruction for the retrieval data.

The accumulated displaying module is further used to add the retrieval data to the preset selected display area according to the adding instruction.

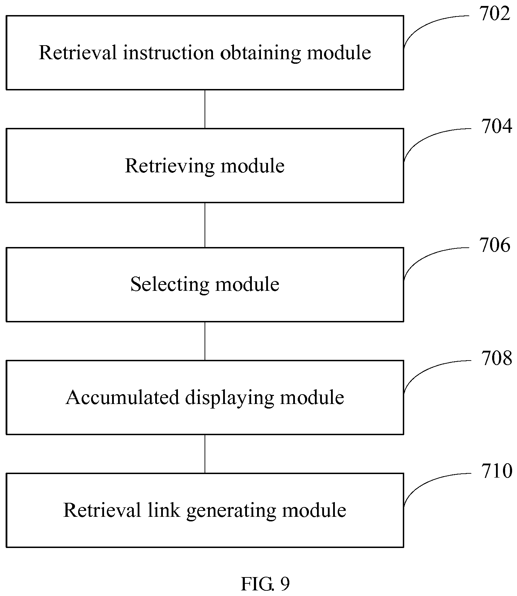

According to an embodiment, referring to FIG. 9, a yet another accumulated retrieval processing device is provided, which includes:

A retrieval link generating module 710 used to generate a corresponding retrieval link in the display area according to the retrieval instruction, thereby re-displaying the retrieval result in a retrieval interface, when a click instruction for the retrieval link is obtained.

According to an embodiment, the accumulated displaying module 708 is further used to generate a corresponding father node according to the retrieval instruction, when the retrieval data corresponding to the different retrieval instructions is included in the display area. And the accumulated displaying module 708 is further used to use the selected retrieval data as a child node of the father node, and display the retrieval data in the display area in the form of a loading tree.

According to an embodiment, the accumulated displaying module 708 is further used to add the retrieval data selected within a preset time range to the preset selected display area.

The various modules of network access behavior recognition device can be implemented, in part or as a whole, by software, hardware or the combinations thereof. Among them, the network interface can be an Ethernet card or wireless card. The aforementioned modules can be embedded in or independent from the ROM of the terminal, or be stored in the ROM of terminal and in the form of software, so as to facilitate the processor(s) to execute corresponding steps of the aforementioned various modules. The processor may be a central processing unit (CPU), a microprocessor, a microcontroller, or the like.

A person skilled in the art should understand that the processes of the methods in the above embodiments can be, in full or in part, implemented by computer programs instructing underlying hardware, the programs can be stored in a computer-readable storage medium, the program can include the processes in the embodiments of the various methods when it is being executed. The storage medium can be a disk, a CD, a ROM, and so on.

The different technical features of the above embodiments can have various combinations which are not described for the purpose of brevity. Nevertheless, to the extent the combining of the different technical features do not conflict with each other, all such combinations must be regarded as being within the scope of the disclosure.

The foregoing implementations are merely specific embodiments of the present disclosure, and are not intended to limit the protection scope of the present disclosure. It should be noted that any variation or replacement readily figured out by persons skilled in the art within the technical scope disclosed in the present disclosure shall all fall into the protection scope of the present disclosure. Therefore, the protection scope of the present disclosure shall be subject to the protection scope of the claims.

## Claims

1. An accumulated retrieval processing method, comprising:
obtaining a retrieval instruction, the retrieval instruction comprising a retrieval keyword;
performing retrieving according to the retrieval instruction, and displaying a corresponding retrieval result, the retrieval result comprising retrieval data matching with the retrieval keyword;
obtaining a selected instruction for the retrieval data; and
adding the retrieval data selected according to the selected instruction to a preset selected display area, wherein the preset selected display area is configured to independently display the selected retrieval data.

2. The method of claim 1, further comprising:
generating a corresponding father node according to the retrieval instruction , when the retrieval data corresponding to different retrieval instructions is included in the preset selected display area, using the selected retrieval data as a child node of the father node, and displaying the retrieval data in the preset selected display area in a form of a loading tree.

3. The method of claim 1, wherein the adding the retrieval data selected according to the selected instruction to the preset selected display area comprises:
adding the retrieval data selected within a preset time range to the preset selected display area.

4. The method of claim 1, wherein prior to adding the retrieval data selected according to the selected instruction to the preset selected display area, the method further comprises:
obtaining an adding instruction for the retrieval data ;
wherein the step of adding the retrieval data selected according to the selected instruction to the preset selected display area comprises:
adding the retrieval data to the preset selected display area according to the adding instruction.

5. The method of claim 1, further comprising:
generating a corresponding retrieval link in the preset selected display area according to the retrieval instruction, thereby re-displaying the retrieval result in a retrieval interface when a click instruction for the retrieval link is obtained.

6. An accumulated retrieval processing device, comprising:
a retrieval instruction obtaining module configured to obtain a retrieval instruction, the retrieval instruction comprising a retrieval keyword;
a retrieving module configured to perform retrieving according to the retrieval instruction and display a corresponding retrieval result, the retrieval result comprising retrieval data matching with the retrieval keyword;
a selecting module configured to obtain a selected instruction for the retrieval data; and
an accumulated displaying module configured to add the selected retrieval data to a preset selected display area, wherein the preset selected display area is configured to independently display the selected retrieval data.

7. The device of claim 6, wherein the accumulated displaying module is further configured to generate a corresponding father node according to the retrieval instruction, when the retrieval data corresponding to the different retrieval instructions is included in the display area, and is further configured to use the selected retrieval data as a child node of the father node, and is further configured to display the retrieval data in the display area in the form of a loading tree.

8. The device of claim 6, wherein the accumulated displaying module is further configured to add the retrieval data selected within a preset time range to the preset selected display area.

9. The device of claim 6, further comprising:
an instruction adding module configured to obtain an adding instruction for the retrieval data;
wherein the accumulated displaying module is further configured to add the retrieval data to the preset selected display area according to the adding instruction.

10. The device of claim 6, further comprising:
a retrieval link generating module configured to generate a corresponding retrieval link in the display area according to the retrieval instruction, thereby re-displaying the retrieval result in a retrieval interface, when a click instruction for the retrieval link is obtained.

11. A terminal comprising a processor, and a memory storing computer executable instructions, which, when executed by the processor cause the processor to perform steps comprising:
obtaining a retrieval instruction, the retrieval instruction comprising a retrieval keyword;
performing retrieving according to the retrieval instruction, and displaying a corresponding retrieval result, the retrieval result comprising retrieval data matching with the retrieval keyword;
obtaining a selected instruction for the retrieval data; and
adding the retrieval data selected according to the selected instruction to a preset selected display area, wherein the preset selected display area is configured to independently display the selected retrieval data.

12. The terminal of claim 11, wherein the processor further executes steps as follows:
generating a corresponding father node according to the retrieval instruction when the retrieval data corresponding to different retrieval instructions is included in the preset selected display area, using the selected retrieval data as a child node of the father node, and displaying the retrieval data in the preset selected display area in a form of a loading tree.

13. The terminal of claim 11, wherein the processor executes the adding the retrieval data selected according to the selected instruction to the preset selected display area comprises:
adding the retrieval data selected within a preset time range to the preset selected display area.

14. The terminal of claim 11, wherein prior to adding the retrieval data selected according to the selected instruction to the preset selected display area, the method further comprises:
obtaining an adding instruction for the retrieval data ;
wherein the step of adding the retrieval data selected according to the selected instruction to the preset selected display area comprises:
adding the retrieval data to the preset selected display area according to the adding instruction.

15. The terminal of claim 11, wherein the processor further executes following steps comprising:
generating a corresponding retrieval link in the display area according to the retrieval instruction, thereby re-displaying the retrieval result in a retrieval interface when a click instruction for the retrieval link is obtained.

16. At least one non-transitory computer-readable medium storing computer executable instructions, which, when executed by at least one processor cause the at least one processor to perform steps comprising:
obtaining a retrieval instruction, the retrieval instruction comprising a retrieval keyword;
performing retrieving according to the retrieval instruction, and displaying a corresponding retrieval result, the retrieval result comprising retrieval data matching with the retrieval keyword;
obtaining a selected instruction for the retrieval data; and
adding the retrieval data selected according to the selected instruction to a preset selected display area, wherein the preset selected display area is configured to independently display the selected retrieval data.

17. The non-transitory computer-readable medium of claim 16, wherein the processor further executes following steps comprising:
generating a corresponding father node according to the retrieval instruction when the retrieval data corresponding to different retrieval instructions is included in the preset selected display area, using the selected retrieval data as a child node of the father node, and displaying the retrieval data in the preset selected display area in a form of a loading tree.

18. The non-transitory computer-readable medium of claim 16, wherein the processor executes the adding the retrieval data selected according to the selected instruction to the preset selected display area comprises:
adding the retrieval data selected within a preset time range to the preset selected display area.

19. The non-transitory computer-readable medium of claim 16, wherein before the step of adding the retrieval data selected according to the selected instruction to the preset selected display area, the processor executes following steps comprising:
obtaining an adding instruction for the retrieval data ;
wherein the step of adding the retrieval data selected according to the selected instruction to the preset selected display area comprises:
adding the retrieval data to the preset selected display area according to the adding instruction.

20. The non-transitory computer-readable medium of claim 16, wherein the processor further executes following steps comprising:
generating a corresponding retrieval link in the display area according to the retrieval instruction, thereby re-displaying the retrieval result in a retrieval interface when a click instruction for the retrieval link is obtained.
